# EUROPÄISCHE PATENTSCHRIFT

(11) **EP 2 539 256 B1**
(45) Veröffentlichungstag und Bekanntmachung des Hinweises auf die Patenterteilung: **19.03.2014**
(21) Anmeldenummer: 11706471.7
(22) Anmeldetag: 22.02.2011
(51) Int. Cl.: B65G 69/20, A23L 3/3409, B65D 88/74

(54) **VERFAHREN ZUM LÜFTEN VON MIT SCHADGASEN KONTAMINIERTEN WAREN UND VERWENDUNG EINES LÜFTUNGSCONTAINERS**
METHOD FOR AERATING GOODS CONTAMINATED WITH HARMFUL GASES AND USE OF AN AERATION CONTAINER
PROCÉDÉ D'AÉRATION DE MARCHANDISES CONTAMINÉES PAR DES GAZ NOCIFS ET UTILISATION D'UN CONTENEUR D'AÉRATION

(30) Priorität: 26.02.2010 DE 102010009599
(43) Veröffentlichungstag der Anmeldung: 02.01.2013
(73) Patentinhaber: Hertel, Frank, 04316 Leipzig (DE)
(72) Erfinder: Hertel, Frank, 04316 Leipzig (DE)
(74) Vertreter: Müller, Volkmar
(86) Internationale Anmeldenummer: PCT/EP2011/000829
(87) Internationale Veröffentlichungsnummer: WO 2011/103995

(56) Entgegenhaltungen:
- EP-A1- 1 179 978
- WO-A1-2006/116809
- US-A1- 2007 163 435
- US-A1- 2008 251 514

## Beschreibung

Transport-Importcontainer aller Art, d. h. insbesondere in einer verschließbaren Bauweise, sind zu einem Anteil von ca. 20% mit erheblichen gasförmigen Schadstoffkonzentrationen im Innenraum und damit beim Begehen des Containers durch Personen in der Atemluft belastet.

Waren im Sinne der Erfindung sind primär Stückgüter aller Art, insbesondere solche, die in Kartons oder Säcken verpackt und somit stapelbar sind, aber auch unverpackte, sowie verpackte Schüttgüter; sekundär unverpackte Schüttgüter und in Behältem befindliche Flüssigkelten.

Dabei handelt es sich nicht nur um Gefahrgut im eigentlichen Sinne, sondern auch um Ladungsinhalte aller Art, d. h. insbesondere Waren, deren Verpackung oder deren Teile, die zum Teil
- zum Schutz vor Schädlingen diesbezüglich bewusst begast wurden,
- verursacht durch ihren Herstellungsprozess oder ihre Stoffzusammensetzung nachgasen oder
- vor dem Transport zur Reduzierung von Schimmelbefall speziell behandelt wurden.

Hierbei handelt es sich in Art und Form um diesbezüglich bekannte Schadstoffe, die entweder unter den im Container herrschenden Bedingungen gasförmig sind, oder um andere Stoffe, z.B, Flüssigkeiten, die aufgrund ihres Dampfdrucks zeitweilig gasförmig vorkommen. Schadstoffe in diesem Sinne sind beispielsweise:
Chlorpikrin / Trichlor-nitro-methan, cis- und trans-1,2-Dichlotethen, Dichlormethan, Ethylbenzol, Schwefelkohlenstoff, Toluol, Trimethylbenzöl mit allen Isomeren, Xylol mit allen Isomeren, Phosphorwasserstoff, Sulfuryldiflourid, Benzol, Trichlorethylen, 1,2-Dichlorethan, 1,3-Dichlorpropen mit Isomeren, Formaldehyd, 1,2-Dichlorpropan, Brommethan, Dibromethan, und Jodmethan.

Diese Schadstoffe sowie deren gasförmigen Komponenten (Schadgase) sind Insbesondere beim manuellen Entladen, welches oft bei importierten Containern üblich ist, Öffnen oder Begehen der Container in der Atemluft oder unmittelbaren Umgebung, beispielsweise im Türbereich des Containers, für Personen gefährlich bzw, gesundheitsschädigend. Alle damit diesbezüglich in Kontakt kommenden Personen, insbesondere beim Arbeiten in einem Container mit solchen Schadgasen, sollten oder müssen geschützt werden. Diese Personen müssen wirksam vor dieses Schadgasen geschützt werden.

Messungen der Containerluft, d. h. der jeweiligen Schadstoffkonzentrationen, geben über eine eventuelle Gefahr bezüglich Schadgasen in üblicher Art und Weise Auskunft.
Um mit den aus den Containern stammenden kontaminierten Waren, bei denen eine relevante Schadstoffkonzentrationen detektiert wurde, gefahrlos umgehen zu können, z.B. Ausladen, Lagern und Inverkehrbringen, ist es oft erforderlich, diese zuvor zu entgasen. Unter Entgasen versteht man insbesondere ausreichend zu lüften, um die Konzentration der Schadgase im Container auf ein für das Personal unschädliche Maß zu senken.
Dies ist insbesondere notwendig bei einer solchen Art der Be- und/oder Entladung, welche nur primär manuell erfolgen kann, da technisch nicht anders möglich. Dies ist beispielsweise bei Containern der Fall, Insbesondere Importcontainern, bei welchen die Ware, beispielsweise eingestapelte Kartons, nicht auf Transportpaletten stehen, d. h. die Ware nicht mit üblichen technischen Entladehilfen, wie Gabelstaplern oder dgl., entladen werden können.

Unter Lüften wird im Sinne der Erfindung insbesondere Verstanden, dass in einem definierten Raum, welcher hin zur Umgebung teilweise nicht verschlossen ist, ein Druckunterschied besteht und/oder erzeugt wird, so dass dort eine Strömung/Zirkulation anzutreffen ist. Diese führt dazu, dass sich die Gas-Luft-Gemische in diesem Raum(Containerluft) und Luft aus dessen Umgebung vermischen. Wird beispielsweise Frischluft in einen solchen Raum eingetragen verdrängt diese regelmäßig das im Raum befindliche Schadgas-Luft-Gemisch, so dass dies zu einer Konzentrationsabnahme des Schadgases im Gas-Luft-Gemisches im Raum führt.

Eine typische Situation bei Waren aus Importcontainern ist, dass die Waren durch die lange Aufenthaltsdauer während des Transports vollkommen durchgegast sind. Das heißt, die gasförmigen Schadstoffe (Schadgase) sind nicht nur im unbeladenen Teil des Containers anzutreffen, sondern haben sich in der Ware und/oder in deren Verpackung verteilt.
Im geschlossenen Container ist regelmäßig keine oder nur eine sehr geringe Strömung/Zirkulation (Luftbewegung), insbesondere verursacht durch unterschiedliche Temperaturen und kleine Öffnungen, wie Ritze und Spalten, anzutreffen. Solche Container sind verschlossen, jedoch oft nicht luftdicht verschlossen.
Werden diese Waren ausgeladen, d. h. erstmals von Außenluft umspült, kommt es zur spontanen Freisetzung (Ausgasen) von Schadstoffen aus der Ware und/oder deren Verpackung In den unbeladenen Teil des Containers. Diese gasförmigen Schadstofffe können somit auch in die Atemluft gelangen, Abhängig von der Art und der Konzentration des ausgasenden Stoffs, der Art und der Verpackung der Waren und den jeweiligen örtlichen Faktoren (Umweltbedingungen) kann der Prozess des Ausgasens sehr lange, d. h. auch bis zu mehreren Tagen, andauern und ein zügiges Entladen des Containers ist ohne die Verwendung von Schutzausrüstung gegen diese Schadgase, insbesondere beim manuellen Entladen, nicht möglich.
Zudem birgt ein weiteres unkontrolliertes Nachgasen, also eine weitere Schadstoffabgabe nach bereits erfolgter erstmaliger Lüftung, erneut Gefahren für den weiteren Umgang mit der Ware und/oder in deren Verpackung. In diesen Fällen müssen die Waren vor der weiteren Verwendung, d. h. dem erneuten Kontakt mit Personen, beispielsweise bei der Zwischenlagerung beim Großhändler oder der Abgabe an Endkunden, erneut entgast werden.

Dazu sind diesbezügliche Bedingungen zu verbessern oder zu schaffen, die es den Schadstoffen ermöglichen, aus den Waren und/oder deren Verpackung auszutreten und in die umgebende Luft zu gelangen. Das heißt, die Waren werden beispielsweise vereinzelt aufgestellt oder ganz oder teilweise ausgepackt, sodass die Schadstoffe durch eine möglichst große Oberfläche abgegeben werden können. Anschließend werden die Schadstoffe mit dem Luftstrom aus dem Raum abtransportiert und, so erforderlich, in üblicher Art und Welse weiter behandelt.

Die Waren gelten im Sinne der Erfindung als "ausreichend gelüftet", wenn nach dem Lüften, keine Gefahr für Personen durch abgegebene gasförmige Schadstoffe (Schadgase) mehr von ihnen ausgeht. Dieser Zustand einer "ausreichenden Lüftung" kann in üblichen Gefährdungsbeurteilungen, die auf Messdaten der jeweiligen Schadstoffkonzentration basieren, bestimmt werden. Die Ware ist im Zustand einer "ausreichenden Lüftung" nicht mehr mit gasförmigen Schadstoffen(Schadgase) kontaminiert oder unterschreitet einen definierten Grenzwert der Schadstoffkonzentration, welcher beispielsweise durch Gesundheitsbehörden oder dgl, bestimmt werden können.

In der Praxis hat sich derzeit und seit vielen Jahren folgende Verfahrensweise (Stand der Technik) durchgesetzt:
1. Der importierte Container, welcher die belasteten Waren enthält, wird, beispielsweise von der Zollstelle, zum Lüftungsort (Entgasungsort), welcher oft nicht der Ort des Empfängers der Ware ist, transportiert. Damit ist regelmäßig ein zusätzlicher Transport zum Lüftungsort erforderlich, so dass zusätzliche Kosten für den Transport und die Anmietung des Ortes der Lüftung (Lüftungsort) notwendig sind.
2. Die Waren werden am Lüftungsort kontrolliert Entladen (Kontrollmessungen, Arbeitsschutz) und an einem lüftungsfähigen Ort aufgestellt, zumeist in einer Lagerhalle oder ähnlichen Lagerplätzen. Die oft vereinzelt aufgestellten Waren, um ein verbessertes Lüften zu ermöglichen, lüften oft ohne Fremdbelüftung, so dass das Lüften relativ viel Zeit, d. h. ggf. mehrere Tage, beansprucht. Wird ein Nachgasen erwartet, wird vorsorglich die Lüftungsdauer verlängert.
3. Nach ausreichender Lüftung werden die Waren umgeladen und verladen und dem Empfänger zugestellt. Das Messen der verbliebenen gasförmigen Schadstoffe bzw. deren Konzentration ist mit relativ großen Unsicherheiten (Messtoleranzen) behaftet, da insbesondere die Messung in großen Räumen, wie Lagerhallen, erfolgt, so dass in üblicher Art und Weise Messtoleranzen zu berücksichtigen sind.
   Alternativ findet vorsorglich ein längeres Lüften als eigentlich erforderlich statt, so dass ein entsprechender Zeitverlust hingenommen wird. Ein eventuelles Nachgasen kann dabei nur schätzungsweise einbezogen werden. Außerdem müssen die Waren oftmals wieder eng zusammengeschichtet werden, damit sie sicher zum Empfänger transportiert werden können. Die ausreichende Lüftung wird mittels Messung somit vor der Verladung festgestellt (ohne festgelegte Standards).
4. Dabei kann durch ein Nachgasen der Waren erneut die Gefahr entstehen, dass bei der Entladung am Empfangsort, d. h. beim Empfänger, hohe Konzentrationen von Schadgasen die Atemluft belasten können. Diesem Effekt kann nur mittels zusätzlicher ausreichender Lüftung, z.B. Entladung mit geöffneten Planen oder zusätzlichem Gebläse bei geschlossenen Fahrzeugen, entgegengewirkt werden.

Aus dem Stand der Technik ist gemäß der WO 2006/116809 A1 ein Verfahren zum Lüften von mit Schadgasen Kontaminierten Waren in einem ortsveränderlichen und verschließbaren Raum nach dem Oberbegriff des Anspruchs 1, sowie ein Verfahren zum Absaugen von Restgasen aus einem Container bekannt. Dabei wird aus einem verschlossenen Container, welcher kontaminierte Ware enthält, Restgas abgesaugt und frische Luft zugeführt.

Aufgabe der Erfindung ist es, die Nachteile des Standes der Technik zu überwinden und insbesondere ein kontrolliertes Lüften bis zu einer ausreichenden Lüftung zu gewährleisten. Dieser Prozess soll möglichst technologisch einfach, sicher und effektiv erfolgen. Außerdem soll die Erfindung für die speziellen Bedingungen bezüglich der Handhabung von Importcontainern geeignet sein. Nachgasende Ware oder der Grad des Nachgasens dieser Ware soll mit vertretbarem Aufwand ermittelbar sein und ein sicheres Lüften auch beim Entladen beim Empfänger gewährleistet sein. Die Sicherheit des Verladepersonals gegen Beeinträchtigungen durch Schadgase, gasende und insbesondere nachgasende Ware soll außerdem erhöht werden.

Die Aufgabe der Erfindung wird durch ein Verfahren gemäß den Merkmalen des Anspruchs 1 gelöst.

Erfindungswesentlich ist, dass das Verfahren zumindest folgende Schritte enthält; Einbringer der kontaminierten Ware in einen verschließbaren Raum über eine Ladeöffnung und Ablegen am Ablagepunkt, wobei zumindest das im Innenraum des Raumes befindliche Luft-Gas-Gemisch über zumindest einen Entlüftungspunkt entweicht und das entweichende Luft-Gas-Gemisch primär in einer Richtung weg von der Ladeöffnung im Innenraum des Raumes hin zum Entlüftungspunkt strömt; Verschließen der Ladeöffnung des Raumes; Lüften des Innenraums des Containers, wobei eine Fördereinrichtung das im Innenraum des Raumes befindliche Luft-Gas-Gemisch bewegt und dieses Luft-Gas-Gemisch über ein Luftaustrittssystem nach außen und Luft über ein Lufteintrittssystem in den Innenraum des Raumes geleitet wird; Messen des Nachgasungsverhaltens der Waren als Zwischenschritt während des Schrittes Lüften des Innenraums des Raumes und/ oder nach dem Schritt Lüften des Innenraums des Raumes; Öffnen des Raumes und Entladen der Waren im Zustand einer ausreichenden Lüftung.

Wesentlich ist, dass durch das erfindungsgemäße Verfahren insbesondere verhindert wird, dass Schadgase in die Atemluft von Personen gelangen. Dies wird insbesondere dadurch erreicht, dass beim manuellen Kontakt mit der Ware eine solche Strömung besteht, die noch vorhandenes Schadgas von der Person weg leitet, so dass diese nicht in die Atemluft gelangen kann.

Die vorliegende Erfindung bewirkt eine Vereinfachung und Beschleunigung des Verfahrens zum Lüften/ Entgasen und bietet mehr Sicherheit am Arbeitsplatz. Dies wird insbesondere folgendermaßen erreicht;
1. Kontrollierte Entladung in den otsveränderlichen Lüftungscontainer bei laufender Luftabsaugung entgegen der Zutrittsrichtung des Ladepersonals. Dadurch wird die Schadgaskonzentration bereits während des Umladens reduziert. Der Ort des Umladens kann dabei frei gewählt werden, z.B. bereits auf dem Containerbahnhof vor Zustellung der Ware. Es entfällt die extra Transport/Umfuhr, d. h. der An- und Abtransport, der Waren zum bisher üblichen Lüftungsort. Die Lüftung beginnt bevorzugt sofort mit dem Beladen des Containers.
2. Waren lüften im Container unter kontrollierten Bedingungen. Es kann die Luftwechselrate bestimmt und gezielt verändert werden. Es sind genauere Konzentrationsmessungen in der Abluft ermöglicht. Es kann außerdem das Nachgasungsverhalten der Waren bei ausgeschalteter Lüftung und verschlossenen Lüftungsöffnungen, beispielsweise können mehrere Vergleichsmessungen in einer solchen Phase ohne Lüftung im Container erfolgen, bestimmt werden. Damit ist eine sehr genaue Gefährdungsanalyse für die nachfolgenden Behandlungsschritte der Waren, insbesondere bezüglich eines eventuellen Nachgasens, ermöglicht. Ein erneutes Beladen und die damit verbundenen Gefährdungen für die beteiligten Personen, insbesondere das Verladepersonal, sowie die damit verbundenen Kosten entfallen bzw. können auf den tatsachlich notwendigen Aufwand reduziert werden.
3. Nach ausreichender Lüftung wird der Container mit der Ware dem Empfänger zugestellt. Durch die geschlossene Bauweise des Containers werden zusätzlich Kosten durch geringere Anforderungen an die Ladungssicherung gespart. Die Waren werden vorzugsweise bei laufender Luftabsaugung entgegen der Zutrittsrichtung entladen. Dadurch ist dabei gewährleistet, dass nachgasende Schadstoffe primär vom Arbeitsplatz weg transportiert werden; eine zusätzliche Maßnahme zur Erhöhung der Sicherheit ist erreicht.

In der Beschreibung wird diesbezüglich oft Container oder Lüftungscontainer verwendet, damit sind die anderen Formen eines verschließbaren, auch luftdicht verschließbaren Raums im Sinne der Erfindung nicht ausgeschlossen.

Wirkungsprinzip des Containers mit verschließbarem Raum, ggf. luftdicht verschließbarem Raum:

Die schadstoffbelasteten Waren werden in den Container derart eingebracht, dass möglichst viel der schadstoffabgebenden Fläche von Luft umströmt werden kann.
Ein Luftstrom transportiert die gasförmigen Schadstoffe in Richtung der Stirnseite des Containers ab.
Nach einer ausreichender Lüftung - im Sinne der Erfindung - können die Waren aus dem Container entnommen werden.
Die Lüftung ist bevorzugt bei allen Arbeitsschritten, außer bei bestimmten Messungen der Schadstoffkonzentration, eingeschaltet.
Bei allen Arbeitsschritten wird das schadstoffbelastete Gas-Luft-Gemisch weg vom Arbeitsplatz des Ladepersonals, insbesondere hin zum Entlüftungspunkt transportiert.

Soll beispielsweise die aktuelle Ausgasungsrate ermittelt werden, so kann im Abluftstrom (vor einem eventuell vorhandenem Filter) oder nach einer definierten Zeit bei abgestellter Lüftung und geschlossenen Luftein- und Auslässen im Innenraum, bevorzugt an definierten Messstellen, gemessen werden.

Das erfindungsgemäße Verfahren wird nachfolgend beispielsweise durch folgende Verfahrensschritte beschrieben:
- Der Lüftungscontainer wird bei eingeschalteter Belüftung insbesondere manuell beladen,
- Die Ladeöffnung oder die Containertüren werden verschlossen, Güter werden gebläsegestützt gelüftet (Fremdlüften)
- nach ausreichender Lüftung wird der Container dem Empfänger zugestellt; die aktive Lüftung wird bevorzugt während des Transports unterbrochen
- beim Empfänger wird die Lüftung wieder eingeschaltet (unterwiesene Person, z.B. Lagerarbeiter oder Lkw-Fahrer)
- nach ausreichender Lüftung können Containertüren sicher geöffnet werden und Container kann sicher entladen werden.

Im Sinne der Erfindung kann der verschließbare Raum integraler Bestandteil eines Containern mit mehr als zwei Türen sein, einer Wechselbrücke, eines LKW-Anhängers, eines LKW-Sattelanhänger oder eines Lkws mit Aufbau sein.

Im Sinne der Erfindung sind die Bezeichnung "Entlüftungspunkt", "Meßpunkt" oder "Ladepunkt" als 3-dimensionale Ortsangaben zu verstehen, die unterschiedliche Raumformen bezeichnen können.

Eine Fördereinrichtung ist im Sinne der Erfindung eine saugende Einheit, so diese zumindest ein Luft-Gas-Gemisch aus dem Innenraum des Lüftungscontainer absaugt.
Als eine solche saugende Einheit sind beispielsweise Radialgebläse oder Niederdruck- oder Mltteldruckventilatoren einsetzbar.

Die Unteransprüche 2 bis 10 geben weitere vorteilhafte Ausgestaltungen der Erfindung gemäß Anspruch 1 wieder, ohne diese zu begrenzen.

Bevorzugt ist, dass der verschließbare Raum ein transportabler Lüftungscontainer, insbesondere ein ISO-Container, beispielsweise gemäß DIN ISO 668 und 830 oder ISO 1496, ist.

Bevorzugt ist außerdem, dass bei ausgeschaltetem Lüftungssystem und verschlossenen Lüftungsöffnungen des Lufteintrittssystem und des Luftaustrittssystem, d. h. der Lüftungscontainer ist insbesondere luftdicht verschlossen, ein Entgasen der kontaminierten Ware zum Zwecke der Beobachtung eines Nachgasens erfolgt.

Bevorzugt ist außerdem, dass beim Entladen der Waren aus dem Lüftungscontainer beim Empfänger der Ware das Lüftungssystem eingeschältet ist.

Bevorzugt ist außerdem, dass die Ware im Lüftungscontainer der Art angeordnet wird, so dass in Abhängigkeit von der Form der Ware oder deren Verpackung eine möglichst große Kontaktfläche mit dem Lüftungsstrom vorhanden ist.

Bevorzugt ist außerdem, dass das über das Luftaustrittssystem nach außen geleitete Luft-Gas-Gemisch in eine Reinigungs- und Filtereinheit eingeleitet wird. Damit ist in einfacher Art und Weise gesichert, dass Schadgase nicht unkontrolliert in die Umgebung des verschließbaren Raumes gelangen. Außerdem ist damit die Möglichkeit eröffnet, das gereinigte und/oder gefilterte Gas-Luft-Gemisch wieder in den Lufteinlass einzuleiten.

Die Aufgabe der Erfindung wird außerdem durch einer Verwendung eines Lüftungscontainers gemäß den Merkmalen des Anspruchs 11 gelöst.

Erfindungswesentlich ist, dass dieser ortsveränderliche Lüftungscontainer zumindest enthält:
- zumindest eine verschließbare Ladeöffnung,
- zumindest einen Entlüftungspunkt, wobei zumindest dieser eine Entlüftungspunkt im Bereich gegenüber der Ladeöffnung angeordnet ist,
- zumindest einen Luftauslass und
zumindest eine Fördereinrichtung, die in Strömungsrichtung hinter oder vor dem Entlüftungspunkt angeordnet ist.

Wesentliche Vorteile des Lüftungscontainers der erfindungsgemäßen Verwendung sind:
- einfach transportierbar, beispielsweise mit Lkw, Schiff, Transportflugzeuge und Eisenbahn,
- mit üblichen Krananlagen kranbar,
- geringe feste Kosten, z.B. keine Kfz-Steuer; wenig Platzbedarf, da stapelbar,
- keine zusätzliche Ladungssicherung der Waren erforderlich, vgl. mit Trailer.
- keine zusätzlich Qualifikation an Personal des Transportfahrzeugs, Spediteur und Lkw-Fahrer,
- zu behandelnde Güter können an nahezu jeder mit Lkw befahrbaren Stelle, übernommen werden, Umfuhren und Zeitverlust werden vermieden
- Güter werden ohne weiteres Umladen dem Empfänger zugestellt,
- die Nachgasungsrate der Güter kann genau ermittelt werden und
- der Gefährdung durch Nachgasen der Ware während des Entladevorganges (nicht lufturnströmte Obefllächen, Blasebalgeffekt beim Anpacken der Güter, z.B. bei Kartons) wird mittels Lüftung und Abtransport der Schadstoffe aktiv entgegengewirkt.

Bevorzugt ist, dass sich in der Wandung des Lüftungscontainer zumindest ein Messpunkt angeordnet ist, welcher eine Probennahme im Innenraum ermöglicht.

Bevorzugt ist außerdem, dass der Lufteinlass und/oder die Lufteinlässe verschließbar ist oder sind.

In Aufbau und Auswahl seiner Komponenten ist der erfindungsgemäße Lüftungscontainer überraschend einfach konzipiert und erfüllt dennoch die gestellte Aufgabe der Erfindung.

Die Unteransprüche 12 bis 15 geben weitere vorteilhafte Ausgestaltungen der Erfindung gemäß Anspruch 11 wieder, ohne diese zu begrenzen.

Die Erfindung wird nachfolgend an Ausführungsbeispielen näher erläutert, ohne damit alle Einsatzmöglichkeiten der Erfindung abschließend dargestellt zu haben.

Die Figuren zeigen:
- Figur 1: einen Lüftungscontainer mit einer Ladeöffnung,
- Figur 2: einen Lüftungscontainer, beladen mit vereinzelten Kartons,
- Figur 3: einen Lüftungscontainer, beladen mit palettierten Kartons,
- Figur 4: einen Lüftungscontainer mit mehreren Entlüftungspunkten,
- Figur 5: einen Lüftungscontainer mit einer Querlüftung,
und
- Figur 6: eine Lüftungsanlage, zumindest bestehend aus einem Lüftungscontainer und einen Lüftungssystem.

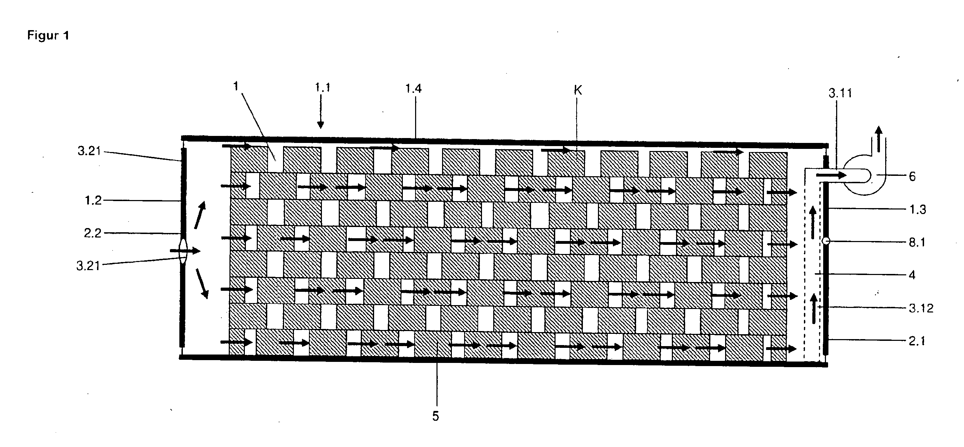

Fig. 1 zeigt einen Lüftungscontainer 1.1 mit einer Ladeöffnung in einer Schnittdarstellung.

Der transportable Lüftungscontainer 1.1 besitzt eine geschlossene Bauweise, so dass sein Innenraum einen verschließbaren Raum 1 bildet, der auch luftdicht verschließbar sein kann. Die Form und die Abmaße des Containers entsprechen bevorzugt dem eines DIN-ISO -Containers (DIN-ISO 668). Damit ist gewährleistet, dass der Lüftungscontainer 1.1 problemlos in das derzeit bestehende internationale Transportsystem integriert werden kann. Zum Verschließen dient eine übliche verschließbare Ladeöffnung 2, die an einer der beiden Stirnseiten 1. 2 und 1.3, hier der Stirnseite 1.2, des kastenförmigen Lüftungscontainers 1.1 vertikal in üblicher Art und Weise angeordnet ist. Die Ladeöffnung 2 ist im geschlossenen Zustand dargestellt.
An der Stirnseite 1. 2 ist zumindest ein verschließbarer Lufteinlass 3.21, der auch luftdicht verschließbarer sein kann, angeordnet.
Der Lufteinlass 3.21 kann eine Verschlussklappe besitzen, so dass insbesondere Schutz vor eindringendem Spritzwasser während des Transports besteht. Außerdem kann der Lüftungscontainer 1.1 verschlossen werden, um den Inhalt des Containers "schwitzen" zu lassen, d. h. Nachgasen zu lassen, um über Messungen u. a. die Schadgas- bzw.-stoffkonzentration der Waren ermitteln zu können.
Zur Messung der Schadstoffkonzentration im Lüftungscontainer 1.1 unter Nutzung einer diesbezüglich üblichen Messeinrichtung, in Fig. 1 nicht dargestellt, können an unterschiedlichen Orten(Punkten) der Wandung des Lüftungscontainers 1.1, d. h. an den Stirn-, Decken- und/oder Längsseiten verschließbare Meßpunkte 8.1 angeordnet sein.
Der Lufteinlass 3.21 und der Luftauslass 3.11 sind im geöffneten Zustand dargestellt.
Das entweichende Luft-Gas-Gemisch strömt im Innenraum des Raumes 1 primär in Richtung weg von der Ladeöffnung 2 hin zum Entlüftunspunkt 4. Dabei gelangt Außenluft über den Lufteinlass 3.21 in den Innentraum des Lüftungscontainers 1.1, vermischt sich mit dem im Lüftungscontainer 1.1 befindlichen Luft-Gas-Gemisch, so dass die Konzentration des Schadgases im Lüftungscontainer 1.1 abgesengt wird, und entweicht über den Luftauslass 3.11 aus dem Lüftungscontainer 1.1. Der Strömungsverlauf ist durch Pfeile und die Richtung der Pfellspitze in Fig. 1 gekennzeichnet.
Im Lüftungscontainer sind an den Ablagepunkten 5 die Waren, hier Kartons K und Schüttgut S, abgelegt.
Am Ablagepunkt 5.1 ist auf einem luftdurchlässigen Gewebeschlauch 3.22, welcher mit dem Lufteinlass 3.21 verbunden ist, Schüttgut S abgelegt. Die durch den Lufteinlass 3.21 einströmende Außenluft wird durch den luftdurchlässigen Gewebeschlauch 3.22 und die Schüttgutschüttung geleitet, so dass ein intensives Durchströmen der Schüttung erreicht ist. Am Ablagepunkt 5.2 reicht der Stapel von lose gestapelten Kartons K, d. h, auf Lücke aufgeschichtet, fast bis zur Containerdecke 1.4.

Am Ablagepunkt 5.3 und Ablagepunkt 5.4 ist jeweils ein Stapel von Kartons, hier auf Palette, erkennbar, welche jedoch nicht bis zur Containerdecke 1.4 reichen.
Zwischen diesen beiden Stapeln ist eine Luftlelteinrichtung 7, beispielsweise eine flexible Plane, angeordnet, welche von der Containerdecke 1.4 bis zur Oberkante des Stapels am Ablagepunkt 5.3 ragt, so dass das entweichende Luft-Gas-Gemisch primär durch den Stapel am Ablagepunkt 5.3 zum Entlüftungspunkt 4 geleitet wird; nicht primär im freien Querschnitt, d. h. oberhalb des der beiden Stapel am Ablagepunkt 5.3 und 5.4.
Der Entlüftungspunkt 4 ist in Fig. 1 in der Nähe der Stirnseite 1.3 angeordnet. Der Entlüftungspunkt 4 ist dabei als ein perforiertes Luftsammelrohr 3.12 ausgebildet, welches am oberen Ende in die Fördereinrichtung 6 mündet.

Der Lüftungscontainer 1.1 besitzt zumindest einen Luftauslass 3.11 und
zumindest eine In Art und Weise bekannte Fördereinrichtung 6, hier eine saugende Einheit, die in Strömungsrichtung somit hinter dem Entlüftungspunkt 4 angeordnet ist.
In Fig. 1 ist der Lüftungscontainer 1.1 zum Zeitpunkt des Verfahrensschrittes "Lüften des Innenraums des Raumes 1" dargestellt.

(Alternativ, in Fig. 1 nicht dargestellt, könnte die Fördereinrichtung 6 nicht im Innenraum des Lüftungscontainers 1.1 angeordnet sei, sondern außerhalb des Lüftungscontainers 1.1. Beispielsweise bei einem Defekt der im Innenraum befindlichen Fördereinrichtung 6 könne zusätzlich eine Fördereinrichtung 6 außen angebracht werden, so dass auch ohne ein Betreten des Innenraums ein Entlüften möglich wäre.)

(Alternativ, in Fig. 1 nicht dargestellt, könnte die Fördereinrichtung 6 ein Gebläse sein, welches in Strömungsrichtung nahe dem Lufteinlass und somit vor dem Entlüftungspunkt 4 angeordnet sein würde.)

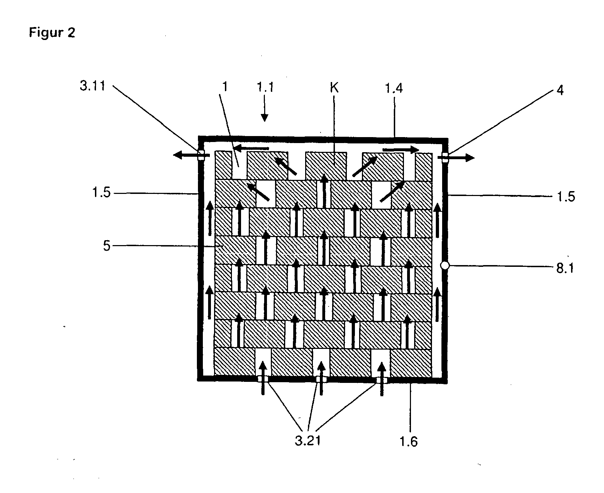

Fig 2 zeigt einen Lüftungscontainer 1.1, beladen mit vereinzelten Kartons K.
Der transportable Lüftungscontainer 1.1 besitzt eine geschlossene Bauweise, d, h. insbesondere besitzt er sechs verschließbare Seiten, nämlich Stirn-, Boden-, Decken- und Längsseiten, die somit den Innenraum des kastenförmigen Lüftungscontainers 1.1 bilden.
Als Zugang zum Innenraum und zum Verschließen dieser Öffnung dient eine übliche verschließbare Ladeöffnung 2, die an einer der beiden Stirnseiten 1. 2 und 1.3, hier der Stirnseite 1.2, des kastenförmigen Lüftungscontainers 1.1 vertikal in üblicher Art und Weise angeordnet ist. Die Ladeöffnung 2 ist im geschlossenen Zustand dargestellt.
An der Stirnseite 1. 2 ist zumindest ein verschließbarer Lufteinlass 3.21 angeordnet, Der Lüftungscontainer 1.1 besitzt zumindest einen Luftauslass 3.11 und zumindest eine in Art und Weise bekannte Fördereinrichtung 6, hier eine saugende Einheit, die in Strömungsrichtung somit hinter dem Entlüftungspunkt 4 angeordnet ist.
Dem Luftauslass 3.11 kann eine Reinigungs- und Filtereinhelt nachgeschaltet sein, die das austretende Gas-Luft-Gemisch in üblicher Art und Weise von Schadgasen reinigt oder dieses filtert.
Die Messung der Schadstoffkonzentration und/oder der Gaswechselrate im Lüftungscontainer 1.1 erfolgt unter Nutzung einer üblichen Messeinrichtung, in Fig. 2 nicht dargestellt. Dazu können an unterschiedlichen Orten der Wandung, d. h. an den Stirn-, Deckeln- und/oder Längsseiten verschließbare Meßpunkte 8.1 angeordnet sein.
Der Strömungsverlauf ist durch Pfeile und die Richtung der Pfeilspitze analog Fig. 1 gekennzeichnet.

Im Sinne der Erfindung ist es alternativ zur in Figur 2 dargestellten Lösung möglich, auf den Lufteinlass 3.21 als gesondertes Bauteil zu verzichten, wobei dessen Funktion durch die Ladeöffnung 2 realisiert wird, d. h, durch ein entsprechendes Öffnen der Ladeöffnung 2 kann Luft von außen während des Lüftens einströmen
In Fig. 2 ist der Lüftungscontainer 1.1 zum Zeitpunkt des Verfahrensschrittes "Lüften des Innenraums des Raumes 1" dargestellt.

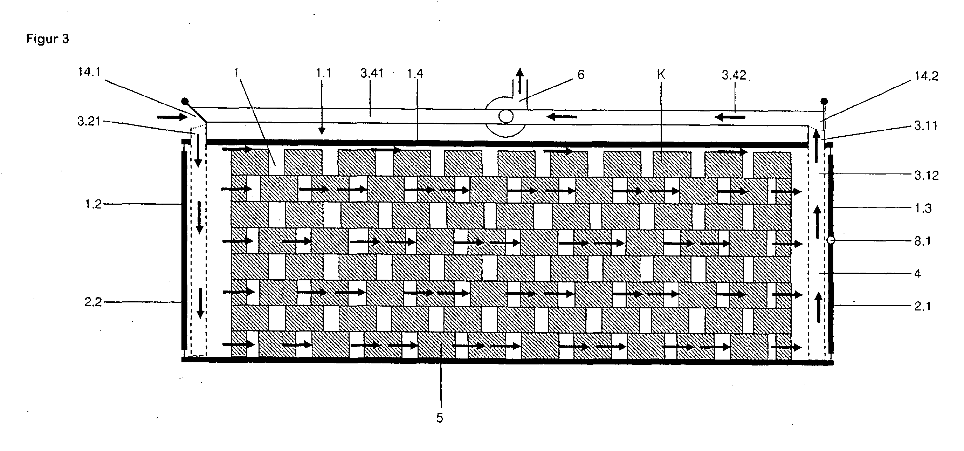

Fig. 3 zeigt einen Lüftungscontainer 1.1, beladen mit palettlerten Kartons. Die auf Paletten stehenden Kartons K, wurden beispielsweise manuell aus einem Importcontainer in den Lüftungscontainer 1.1 umgeladen und dabei vereinzeit, d.h insbesondere auf Lücke gestellt, so dass ein verbessertes Lüften ermöglicht ist. In Fig. 3 sind sechs Stapel palettierter Kartons K ersichtlich, wobei jeweils ein solcher Stapel an einem der Ablagepunkte 5, die Ablagepunkte 5.1, 5.2, 5.3, 5.4, 5.5 und 5.6 aufgestellt sind. Der Lüftungscontainer 1.1 entspricht grundsätzlich der Ausführung gemäß Fig. 2, wobei zusätzlich Luftleiteinrichtungen 7, eine Signaleinrichtung 9 und ein Verschlussmechanismus 10, welcher durch Messdaten, die durch ein Messgerät zur Konzentrationsmessung und/oder der Messung der Luftwechselrate 8 des entweichenden Luft-Gas-Gemisch ermittelbar sind, in üblicher Art und Weise ansteuerbar ist.
Zwischen diesen sechs Stapeln sind fünf Luftleiteinrichtung 7 angeordnet, welche von der Containerdecke 1.4 bis zur Oberkante der Stapel, so dass das Luft-Gas-Gemisch primär durch die Lücken der Stapel an den Ablagepunkt 5.1, 5.2 5.3, 5.4, 5.5 und 5.6 zum Entlüftungspunkt 4 geleitet wird; nicht primär im freien Querschnitt, d. h. nicht oberhalb der Stapel.
Der Strömungsverlauf ist durch Pfelie und die Richtung der Pfeilspitze in Fig. 3 gekennzeichnet. In Fig. 3 ist der Lüftungscontainer 1.1 zum Zeitpunkt des Verfahrensschrittes "Lüften des Innenraums des Raumes 1" dargestellt.

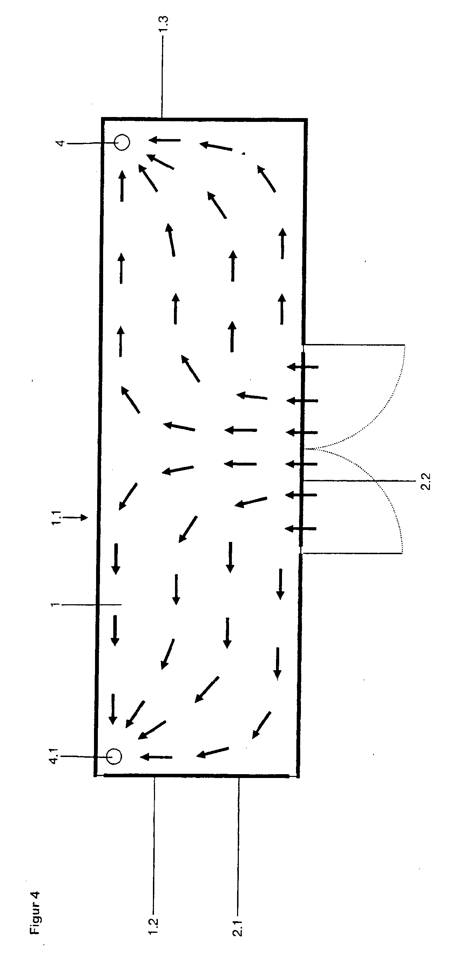

Fig. 4 zeigt einen Lüftungscontainer 1.1 gemäß Fig. 2, beladen mit vereinzelten Kartons K, wobei bei dieser Ausführungsform der Erfindung mehrere Lüftungspunkte 4 angeordnet sind.
Die weiteren Entlüftungspunkte 4, in Fig. 4 sind zwei weitere Entlüftungspunkte 4.1 und 4.2 dargestellt, sind durch Entlüftungsleitungen 3.4 mit dem Entlüftungspunkt 4 verbunden, wobei zumindest einer dieser Entlüftungspunkte 4 im Bereich der Stirnseite 1.3 im Sinne der Erfindung angeordnet sein muss. Die beiden weiteren Entlüftungspunkte 4.1 und 4.2 sind in Strömungsrichtung jeweils hinter dem Stapel angeordnet. Damit kann insbesondere ein schnelleres Entlüften realisiert werden.
Außerdem ist ermöglicht, dass wahlweise nur an einem oder einigen der Entlüftungspunkte 4, 4.1 und 4.2 entlüftet wird, was beispielsweise durch ein Verschließen zumindest einer der Entlüftungsleitungen 3.4 realisierbar ist.

Die beiden Eritlüflungsleitungen können an den Längsseiten des Lüftungscontainers 1.1 angeordnet sein; können alternativ oder zusätzlich auch an der Containerdecke angeordnet sein. Mehrere Entlüftungspunkte ermöglichen eine schnellere Konzentrationssenkung der Schadgase im Innenraum.
Der Lüftungscontainer 1.1 besitzt zumindest einen Luftauslass 3.11 und zumindest eine in Art und Weise bekannte Fördereinrichtung 6, hier eine saugende Einheit, die In Strömungsrichtung hinter dem Entlüftungspunkt 4, in dieser Ausführungsform an der Außenwand der Stirnseite 1.3, angeordnet ist.
In Fig. 4 ist der Lüftungscontainer 1.1 zum Zeitpunkt des Verfahrensschrittes "Lüften des Innenraums des Raumes 1" dargestellt.

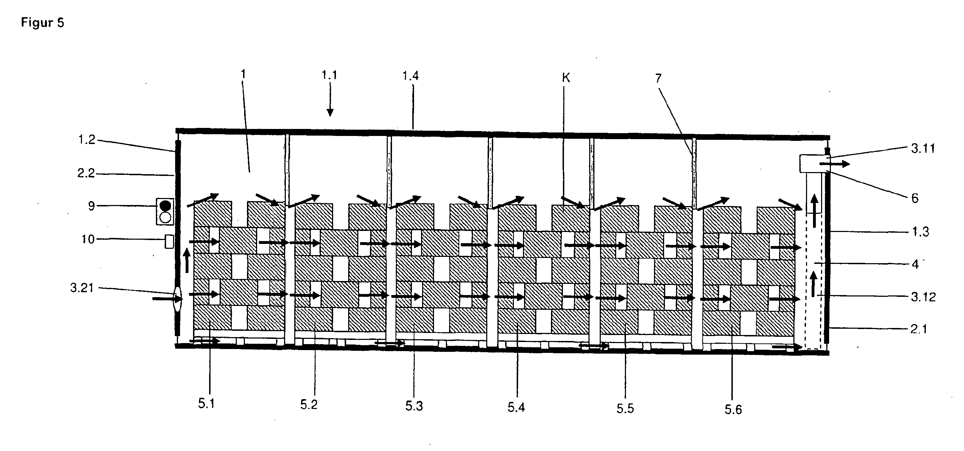

Fig. 5 zeigt in einer Ansicht quer zur Längsachse des Lüftungscontainer 1.1, diesen mit einer Querlüftung.
Der Lüftungscontainer 1.1 entspricht grundsätzlich der Ausführung gemäß Fig. 2, wobei abweichend davon im Boden 1.6 ein Lufteintrittssystem 3.1, mit mehreren Lufteinlässen 3.21, in Fig. 5 sind drei davon erkennbar, die an unterschiedlichen Ablagepunkten 5 verteilt sein können, angeordnet sind. Die Luftauslässe 3.11, in Fig. 5 sind zwei davon erkennbar, sind in den beiden Längsseiten 1.5 angeordnet.

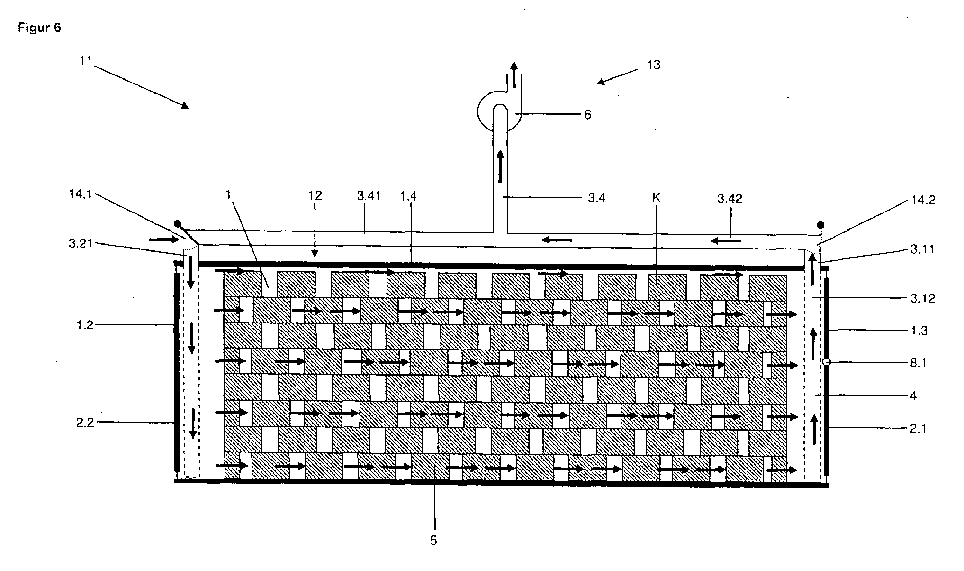

Fig. 6 zeigt eine Lüftungsanlage 11, die zumindest bestehend aus zwei Anlagenteilen, nämlich einem transportablen Lüftungscontainer 12 als erstem Anlagenteil der Lüftungsanlage 11, und einer Fördereinheit für gasförmige Medien 13 als zweitem Anlagenteil der Lüftungsanlage 11.

Der Lüftungscontainer 12 ist in einer verschließbaren Bauweise ausgeführt. Er besitzt zumindest eine verschließbare Ladeöffnung 2, zumindest einen Entlüftungspunkt 4, wobei zumindest dieser eine Entlüftungspunkt 4 im Bereich gegenüber der Ladeöffnung 2 angeordnet ist, und zumindest einem Luftauslass 3.11.
Die Fördereinheit für gasförmige Medien 13 als zweiten Anlagenteil der Lüftungsanlage 11, mit zumindest einer Fördereinrichtung 6, hier eine saugende Einheit, die in Strömungsrichtung hinter dem Entlüftungspunkt 4 des Lüftungscontainers 12 angeordnet.
Die Fördereinheit für gasförmige Medien 13 kann transportabel, d. h. insbesondere ortsveränderlich, sein.
Im Sinne der Erfindung kann die Fördereinheit für gasförmige Medien 13 auch ortsfest sein, beispielsweise eine Fördereinheit oder ein Fördersystem, welches am Aufstellungsort der Lüftungsanlage 11 schon vorhanden ist.

Die beiden Anlagenteile sind durch eine Luftleitung 3.4 in üblicher Art und Weise miteinander verbunden. Die Luftleitung 3.4 kann bevorzugt flexibel ausgebildet sein.
Die Lüftungsanlage 1 kann eine Reinigungs- und Filtereinheit besitzen oder mit einer solchen verbindbar sein, welche das aus dem Lüftungscontainer 12 austretende Gas-Luft-Gemisch in üblicher Art und Welse von Schadgasen reinigt oder dieses filtert.

Der Strömungsverlauf ist durch Pfeile und die Richtung der Pfeilspitze in Fig. 6 gekennzeichnet. In Fig. 6 ist die Lüftungsanlage 11 zum Zeitpunkt des Verfahrensschrittes "Lüften des Innenraums des Raumes 1" dargestellt.

Weitere Gestaltungsmöglichkeiten, die Details des erfindungsgemäßen Lüftungscontainers betreffen können sind;

### Lufteinlass:

Dabei entspricht der Einlassquerschnitt bevorzugt dem Auslassquerschnitt, um höhere Einströmgeschwindigkeit durch den Injektoreffekt Bereiche mit geringer Luftströmung zu verhindern. Sind Einlassschlitze in den Sicken der Türen mit hochgezogenen Blechen auf der Innenseite angeordnet, wird eindringendes Regenwasser beim Lüften und Transport verhindert.

### Luftauslass 3.11:

Luftauslass im vorderen Bereich (Breit- oder Stirnseite)
- zurückgesetzter Rohrstutzen an Außenseite: bei Ausfall des inneren Gebläses kann außen ein Ersatzgebläse angeflanscht werden
- Verschlussklappe: Schutz vor Regenwasser, eindringenden Spritzwasser während des Transports und Möglichkeit, Container "schwitzen" zu lassen um über Messungen das Ausgasungspotential der Güter ermittein zu können
- Ermöglicht eine Filterung und/oder Reinigung des nach außen geleiteten Gas-LuftGemisches
- Ermöglicht eine Einleitung oder Zumlschung des zuvor gefilterten Gas-Luft-Gemisches in den Lufteinlass.

### Fördereinrichtung:

- Dimensionierung der saugenden Einheit so, dass auch bei steigendem Strömungswiderstand (z.B. Papier verstopft teil des Ansaugrohres) eine ausreichende Luftförderung gewährleistet ist
- automatische Kontrolle der Drehrichtung. Kontrolle durch Bediener möglich
- wenn erforderlich wird zwischen Fördereinrichtung und Auslassstutzen ein Luftfilter mittels Schläuchen geklemmt

### Luftsammelrohr 3.12:

- perforiert (Schutzgitter für Fördereinrichtung)
- um Luftansaugung in der Höhe zu verstellen, werden Teile des Ansaugrohrs mit umschlingenden Blenden verdeckt

### Luftleiteinrichtungen 7, deckenseitig:

- da die meisten Güter nicht die gesamte Ladehöhe ausnutzen, werden deckenseitig Luftleiteinrichtungen angebracht. Diese vermindern den Luftstrom über dem Gut und leiten den Luftstrom zurück durch das Gut durch (steigert Effizienz)
- die Luftleiteinrichtungen sind herablassbar und werden mit fortschreitender Beladung positioniert. Sie werden während der Entladung wieder nach oben "geklappt" und stören nicht bei der weiteren Entladung

### Signaleinrichtung 9/Ampel:

- signalisiert Empfänger, wann nach eingeschalteter Lüftung die Containertüren geöffnet werden kann und die Entladung beginnen kann
- rotes und grünes Signallicht an Containertüre
- rotes Licht signalisiert: sicheres Türenöffnen nicht möglich
- grünes Licht: sicheres Türenöffnen möglich
grün brennt, wenn Fördereinrichtung läuft und mindestens die gesamte Containerluft einmal getauscht wurde (Kontrolle über Drehzahlwächter und Zeitschaltuhr)

### Bezugszeichenliste

- 1: Raum
- 1.1: Lüftungscontainer
- 1.2: Stirnseite
- 1.3: Stirnseite
- 1.4: Decke
- 1.5: Längsseite
- 2: Ladeöffnung
- 3: Lüftungssystem
- 3.1: Luftaustrittssystem
- 3.11: Luftauslass
- 3.12: Luftsammelrohr
- 3.2: Lufteintrittssystem
- 3.21: Lufteinlass
- 3.22: Gewebeschlauch
- 3.3: Lüftungsöffnung
- 3.4: Lüftungsleitung
- 4: Entlüftunspunkt
- 5: Ablagepunkt
- 6: Fördereinrichtung
- 7: Luftleiteinrichtungen
- 8: Messgerät zur Konzentrationsmessung
- 8.1: Messpunkt (in Wandung)
- 9: Signaleinrichtung
- 10: Verschlussmechanismus
- 11: Lüftungsanlage
- 12: Lüftungscontainer
- 13: Fördereinheit für gasförmige Medien
- S: Schüttgut
- K: Karton

## Patentansprüche

1. Verfahren zum Lüften von mit Schadgasen kontaminierten Waren in einem ortsveränderlichen und verschließbaren Raum (1), wobei das Verfahren zumindest folgende Schritte enthält:
- Einbringen der kontaminierten Ware in einen Raum (1) über eine Ladeöffnung (2) und Ablegen am Ablagepunkt (5),
- Verschließen der Ladeöffnung (2) des Raumes (1),
- Lüften des Innenraums des Raumes (1), wobei eine Fördereinrichtung (6) das im Innenraum des Raumes (1) befindliche Luft-Gas-Gemisch bewegt und dieses Luft-Gas-Gemisch über ein Luftaustrittssystem (3.1) nach außen und Luft über ein Lufteintrittssystem (3.2) in den Innenraum des Raumes (1) geleitet wird,
- Öffnen des Raumes (1) und
Entladen der Waren , **dadurch gekennzeichnet, dass** das Einbringen der kontaminierten Ware in einen Raum (1) über eine Ladeöffnung (2) und Ablegen am Ablagepunkt (5), wobei zumindest das im Innenraum des Raumes (1) befindliche Luft-Gas-Gemisch über zumindest einen Entlüftungspunkt (4) entweicht und das entweichende Luft-Gas-Gemisch primär in einer Richtung weg von der Ladeöffnung (2) im Innenraum des Raumes (1) hin zum Entlüftungspunkt (4) strömt, ein Messen des Nachgasungsverhaltens der Waren als Zwischenschritt während des Schrittes Lüften des Innenraums des Raumes (1) und/ oder nach dem Schritt Lüften des Innenraums des Raumes (1) erfolgt und das Entladen der Waren im Zustand einer ausreichenden Lüftung erfolgt.

2. Verfahren nach Anspruch 1, **dadurch gekennzeichnet, dass** der Raum (1) ein transportabler Lüftungscontainer (1.1), insbesondere ein ISO-Container, ist.

3. Verfahren nach Anspruch 1, **dadurch gekennzeichnet, dass** bei ausgeschaltetem Lüftungssystem (3) und verschlossenen Lüftungsöffnungen (3.3) des Lufteintrittssystem (3.2) und des Luftaustrittssystem (3.1) ein Entgasen der kontaminierten Ware zum Zwecke der Beobachtung eines Nachgasens erfolgt.

4. Verfahren nach Anspruch 1, **dadurch gekennzeichnet, dass** die Ablagepunkte (5) der kontaminierten Waren sich im Innenraum zwischen der Ladeöffnung (2) und dem Entlüftungspunkt (4) befinden.

5. Verfahren nach Anspruch 1, **dadurch gekennzeichnet, dass** vor dem Entladen der Waren aus dem Lüftungscontainer (1.1) ein Transport der Ware im Lüftungscontainer (1.1) zum Empfänger der Ware erfolgt, wobei während des Transports das Lüftungssystem (3) vorzugsweise ausgeschaltet ist.

6. Verfahren nach Anspruch 1, **dadurch gekennzeichnet, dass** vor dem Entladen der Waren nach einer ausreichenden Lüftung und bei eingeschaltetem Lüftungssystem (3) eine Konzentrationsmessung oder ein Messen der Gaswechselrate im Luftaustrittssystem (3.1) erfolgt.

7. Verfahren nach Anspruch 1, **dadurch gekennzeichnet, dass** vor dem Öffnen des Containers (1) zum Entladen der Ware das Nachgasungsverhalten der Waren bei ausgeschaltetem Lüftungssystem (3) und verschlossenen Lüftungsöffnungen (3.3) des Lufteintrittssystem (3.2) und des Luftaustritissystem (3.1) bestimmt wird.

8. Verfahren nach Anspruch 1, **dadurch gekennzeichnet, dass** das im Innenraum des Lüftungscontainers (1.1) befindliche Luft-Gas-Gemisch vom Ablagepunkt (5) entfernt wird.

9. Verfahren nach Anspruch 1, **dadurch gekennzeichnet, dass** die Ware im Lüftungscontainer (1.1) der Art angeordnet wird, so dass in Abhängigkeit von der Form der Ware oder deren Verpackung eine möglichst große Kontaktfläche mit dem Lüftungsstrom vorhanden ist.

10. Verfahren nach Anspruch 1, **dadurch gekennzeichnet, dass** das über ein Luftaustrittssystem (3.1) nach außen geleitete Luft-Gas-Gemisch in eine Reinigungs- und Filtereinheit eingeleitet wird.

11. Verwendung eines Lüftungscontainers (1.1) zur Durchführung des Verfahrens gemäß den Ansprüchen 1 bis 10 als Warenschleuse, wobei der ortsveränderliche Lüftungscontainer zumindest enthält,
- zumindest eine verschließbare Ladeöffnung (2),
- zumindest einen Entlüftungspunkt (4),
- zumindest einen Luftauslass (3.11) und
- zumindest eine Fördereinrichtung (6), **dadurch gekennzeichnet, dass** zumindest dieser eine Entlüftungspunkt (4) im Bereich gegenüber der Ladeöffnung (2) angeordnet ist und zumindest eine Fördereinrichtung (6) in Strömungsrichtung hinter dem Entlüftungspunkt (4) angeordnet ist.

12. Verwendung des Lüftungscontainers (1.1) nach Anspruch 11, **dadurch gekennzeichnet, dass** weitere Entlüftungspunkte (4), insbesondere im Bereich der Ablagepunkt (5), angeordnet sind.

13. Verwendung des Lüftungscontainers (1.1) nach Anspruch 11, **dadurch gekennzeichnet, dass** die Fördereinrichtung (6) eine saugende Einheit ist und innerhalb und/oder außerhalb des Innenraums des Lüftungscontainers (1.1) angeordnet ist.

14. Verwendung des Lüftungscontainers (1.1) nach Anspruch 11, **dadurch gekennzeichnet, dass** der Lüftungscontainer (1.1) ein ISO- Container ist, der zumindest eine Ladeöffnung (2) besitzt.

15. Verwendung des Lüftungscontainers (1.1) nach Anspruch 11, **dadurch gekennzeichnet, dass** im Lüftungscontainer (1.1) zumindest eine Luftleiteinrichtung (7) angeordnet ist.

## Claims

1. Method for aerating goods contaminated with harmful gases in a mobile and sealable chamber (1), said method including at least the following steps:
- inserting the contaminated goods into a chamber (1) through a loading opening (2) and placing said goods at the placement point (5),
- sealing the loading opening (2) of the chamber (1),
- aerating the interior of the chamber (1), wherein a conveyor (6) moves the air-gas mixture contained in the interior of the chamber (1) in order to discharge said air-gas mixture to the outside through an air outlet system (3.1) and flowing the interior of the chamber (1) with air through an air inlet system (3.2),
- opening the chamber (1) and
unloading the goods, **characterized in that** the insertion of the contaminated goods into chamber (1) through a loading opening (2) and placing said goods at the placement point (5), wherein at least the air-gas mixture in the interior of chamber (1) escapes through at least one venting point (4) and the escaping air-gas mixture flows primarily in a direction away from the loading point (2) in the interior of the chamber (1) to the venting point (4), and the measuring of the after-gassing behaviour of the goods as an interim step during the step of "aerating the interior of the chamber (1)", and/or after the step of "aerating the interior of the chamber (1)", and the goods are unloaded in a status of adequate aeration.

2. A method according to Claim 1, **characterized in that** the chamber (1) is a mobile aeration container (1.1), in particular an ISO-Container.

3. A method according to Claim 1, **characterized in that** the polluted goods can degas for the purpose of monitoring whether after-gassing is taking place, while the aeration system (3) is switched off and the aeration openings (3.3) of the air inlet system (3.2) and air outlet system (3.1) are closed.

4. A method according to Claim 1, **characterized in that** the placement points (5) of the contaminated goods are located in the interior between the loading opening (2) and the venting point (4).

5. A method according to Claim 1, **characterized in that** the goods are first transported in the aeration container (1.1) to the consignee of the goods before they are unloaded from the aeration container (1.1), wherein the aeration system (3) is preferably switched off during transport.

6. A method according to Claim 1, **characterized in that** after an adequate aeration and with the aeration system (3) switched on, a measurement of concentration or of the air exchange rate in the air outlet system (3.1) is carried out before the goods are unloaded.

7. A method according to Claim 1, **characterized in that** before the container (1) is opened to unload the goods, the after-gassing behaviour of the goods is determined while the aeration system (3) is switched off and the aeration openings (3.3) of the air inlet system (3.2) and air outlet system (3.1) are closed.

8. A method according to Claim 1, **characterized in that** the air-gas mixture contained in the aeration chamber (1.1) is removed from the placement point (5).

9. A method according to Claim 1, **characterized in that** the goods are arranged in the aeration container (1.1) in such a way that depending on the shape of goods or their packing, the area of exposure to the air flow is as large as possible.

10. A method according to Claim 1, **characterized in that** the air-gas mixture discharged to the outside through the air outlet system (3.1) is directed into a cleaning and filtering unit.

11. The use of an aeration container (1.1) as a goods sluice for the conduction of the method according to Claims 1 through 10, the mobile aeration container at least comprising
- at least one sealable loading opening (2),
- at least one venting point (4),
- at least one air outlet (3.11), and
- at least one conveyor (6), **characterized in that** at least that one venting point (4) is located opposite the loading opening (2) and at least one conveyor (6) downstream the venting point (4).

12. The use of the aeration container (1.1) according to Claim 11, **characterized in that** there are other venting points (4), in particular those located in the area of the placement points (5).

13. The use of the aeration container (1.1) according to Claim 11, **characterized in that** the conveyor (6) is a suction unit, which is located inside and/or outside the interior of the aeration container (1.1).

14. The use of the aeration container (1.1) according to Claim 11, **characterized in that** the aeration container (1.1) is an ISO-Container which has at least one loading opening (2).

15. The use of the aeration container (1.1) according to Claim 11, **characterized in that** at least one air guide unit (7) is arranged in the aeration container (1.1).

## Revendications

1. Procédé pour aérer les marchandises contaminées par des gaz nocifs dans un espace mobile et pouvant être fermé (1), le procédé comprenant au moins les étapes suivantes :
- l'introduction de la marchandise contaminée dans un espace (1) via une ouverture de chargement (2) et la dépose au point de dépôt (5),
- la fermeture de l'ouverture de chargement (2) de l'espace (1),
- l'aération du volume intérieur de l'espace (1), au cours de laquelle un dispositif de transport (6) déplace le mélange air-gaz se trouvant dans le volume intérieur de l'espace (1) et ce mélange air-gaz est évacué via un système de sortie d'air (3.1) à l'extérieur et de l'air est amené via un système d'entrée d'air (3.2) dans le volume intérieur de l'espace (1),
- l'ouverture de l'espace (1) et
le déchargement des marchandises, qui est **caractérisé par** l'introduction de la marchandise contaminée dans un espace (1) via une ouverture de chargement (2) et la dépose au point de dépôt (5), cependant qu'au moins le mélange air-gaz se trouvant dans le volume intérieur de l'espace (1) s'échappe via au moins un point de purge d'air (4) et le mélange air-gaz évacué s'écoule principalement dans une direction éloignée de l'ouverture de chargement (2) dans le volume intérieur de l'espace (1) jusqu'au point de purge d'air (4), une mesure du comportement post-gazage des marchandises comme étape intermédiaire pendant l'étape de l'aération du volume intérieur de l'espace (1) et/ou après l'étape aération du volume intérieur de l'espace (1) et le déchargement des marchandises, une fois qu'elles ont été suffisamment aérées.

2. Procédé selon la revendication 1, **caractérisé en ce que** l'espace (1) est un conteneur d'aération transportable (1.1), en particulier un conteneur ISO.

3. Procédé selon la revendication 1, qui est caractérisé, avec un système d'aération hors tension (3) et des ouvertures d'aération fermées (3.3) du système d'entrée d'air (3.2) et du système de sortie d'air (3.1), par un dégazage des marchandises contaminées, pour observer un post-gazage.

4. Procédé selon la revendication 1, **caractérisé en ce que** les points de dépôt (5) des marchandises contaminées se trouvent dans le volume intérieur entre l'ouverture de chargement (2) et le point de purge d'air (4).

5. Procédé selon la revendication 1, qui est caractérisé, avant le déchargement des marchandises du conteneur d'aération (1.1), par un transport de la marchandise dans le conteneur d'aération (1.1) pour réceptionner la marchandise, pendant le transport le système d'aération (3) étant de préférence hors tension.

6. Procédé selon la revendication 1, qui est caractérisé, avant le déchargement des marchandises après une aération suffisante et avec un système d'aération mis sous tension (3), par une mesure de la concentration ou une mesure du taux de changement de gaz dans le système de sortie d'air (3.1).

7. Procédé selon la revendication 1, qui est caractérisé, avant l'ouverture du conteneur (1) pour décharger la marchandise, par la détermination du comportement post-gazage des marchandises avec un système d'aération hors tension (3) et des ouvertures d'aération fermées (3.3) du système d'entrée d'air (3.2) et du système de sortie d'air (3.1).

8. Procédé selon la revendication 1, **caractérisé en ce que** le mélange air-gaz se trouvant dans le volume intérieur du conteneur d'aération (1.1) est éliminé du point de dépôt (5).

9. Procédé selon la revendication 1, **caractérisé en ce que** la marchandise est placée dans le conteneur d'aération (1.1), de sorte qu'en fonction de la forme de la marchandise ou de son emballage une surface la plus grande possible soit en contact avec le flux d'air.

10. Procédé selon la revendication 1, **caractérisé en ce que** le mélange air-gaz évacué à l'extérieur via un système de sortie d'air (3.1) est introduit dans une unité de nettoyage et de filtre.

11. Utilisation d'un conteneur d'aération (1.1) pour exécuter le procédé selon les revendications 1 à 10 comme sas pour marchandises, dans laquelle le conteneur d'aération mobile contient au moins,
- au moins une ouverture de chargement pouvant être fermée (2),
- au moins un point de purge d'air (4),
- au moins une sortie d'air (3.11) et
- au moins un dispositif de transport (6), **caractérisé en ce qu'**au moins un point de purge d'air (4) est situé dans le secteur en face de l'ouverture de chargement (2) et au moins un dispositif de transport (6) est placé dans le sens de l'écoulement derrière le point de purge d'air (4).

12. Utilisation du conteneur d'aération (1.1) selon la revendication 11, qui est **caractérisé par** la disposition d'autres points de purge d'air (4), en particulier dans le secteur du point de dépôt (5).

13. Utilisation du conteneur d'aération (1.1) selon la revendication 11, **caractérisé en ce que** le dispositif de transport (6) est une unité aspirante et
qu'il est placé à l'intérieur et/ou à l'extérieur du volume intérieur du conteneur d'aération (1.1).

14. Utilisation du conteneur d'aération (1.1) selon la revendication 11, **caractérisé en ce que** le conteneur d'aération (1.1) est un conteneur ISO, qui possède au moins une ouverture de chargement (2).

15. Utilisation du conteneur d'aération (1.1) selon la revendication 11, **caractérisé en ce qu'**au moins un système de conduite d'air (7) est disposé dans le conteneur d'aération (1.1).
